(19) Europäisches Patentamt
European Patent Office
Office européen des brevets

(11) **EP 1 975 662 A1**

(12) **EUROPEAN PATENT APPLICATION**
published in accordance with Art. 158(3) EPC

(43) Date of publication:
**01.10.2008 Bulletin 2008/40**

(51) Int Cl.:
*G02B 7/28* (2006.01)   *G02B 7/34* (2006.01)
*G02B 7/36* (2006.01)   *G03B 13/36* (2006.01)
*H04N 5/232* (2006.01)   *H04N 101/00* (2006.01)

(21) Application number: **07706845.0**

(22) Date of filing: **16.01.2007**

(86) International application number:
**PCT/JP2007/050518**

(87) International publication number:
**WO 2007/083633 (26.07.2007 Gazette 2007/30)**

(84) Designated Contracting States:
**DE FR GB**

(30) Priority: **17.01.2006 JP 2006008379**

(71) Applicant: **Sony Corporation**
**Minato-ku**
**Tokyo (JP)**

(72) Inventors:
• **FUJII, Shinichi**
**Tokyo 141-0001 (JP)**
• **AKAMATSU, Norihiko**
**Tokyo 141-0001 (JP)**

• **AOYAMA, Jun**
**Tokyo 141-0001 (JP)**
• **SHINTANI, Dai**
**Osaka 594-1104 (JP)**
• **NAKAJIMA, Hidekazu**
**Osaka 574-0062 (JP)**

(74) Representative: **Körber, Martin Hans**
**Mitscherlich & Partner**
**Patent- und Rechtsanwälte**
**Postfach 33 06 09**
**80066 München (DE)**

(54) **FOCUS CONTROL DEVICE AND IMAGING DEVICE**

(57) During contrast AF control prior to the actual shooting, of a high-pass filter (601) and band-pass filters (602) to (604) which are provided in an AF circuit (600) and have mutually different frequency characteristics, AF evaluation values acquired by using the high-pass filter (601) are used most preferentially in detecting the lens focusing position of a focus lens (2a). In this way, the HPF (601) that emphasizes and extracts high frequency band components, which increase in image data when shooting a typical subject, is set to be used preferentially, thereby making it possible to perform high-precision focusing control with respect to various kinds of subject.

FIG. 8

EP 1 975 662 A1

**Description**

Technical Field

The present invention relates to a focusing control technique.

Background Art

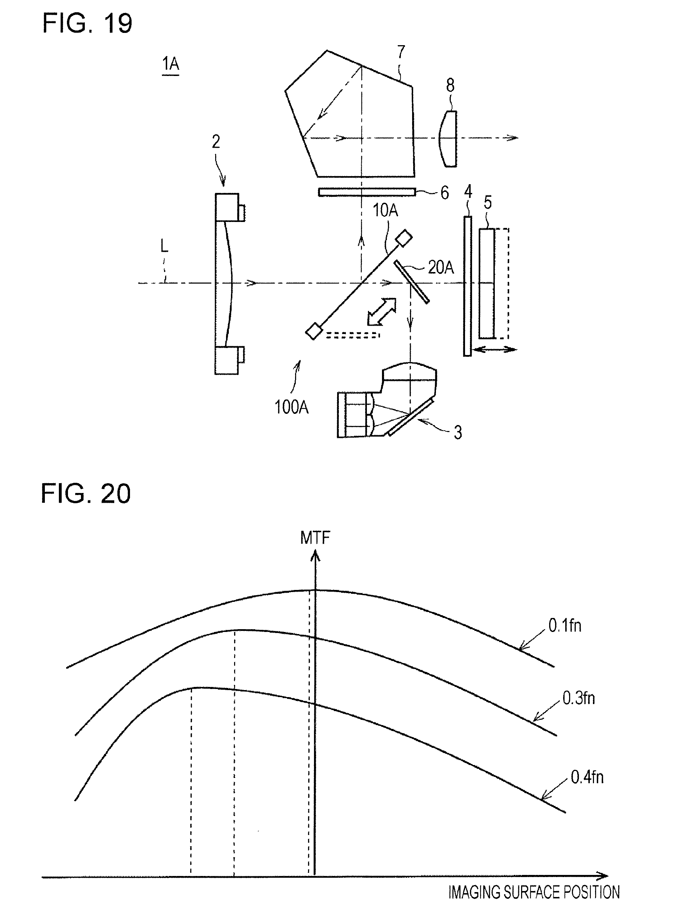

In the related art, a so-called phase difference method is often adopted for the auto focus (AF) control carried out in imaging apparatuses such as a silver-halide film camera. However, it is known that the precision of AF control based on this phase difference method is not good, particularly when shooting at a small f-stop.
On the other hand, in recent years, with the advent of digital cameras, imaging apparatuses adopting AF control based on a so-called contrast method (hill climbing method) have become widespread. It is known that AF control based on the contrast method provides higher AF precision than AF control based on the phase difference method.
Accordingly, it is conceivable to achieve improved AF precision by using AF control based on the phase difference method and AF control based on the contrast method in combination.
Incidentally, AF control based on the contrast method generally uses high frequency components extracted by using a high-pass filter or the like as evaluation values, on the basis of the human visual characteristic of perceiving a subject image as being sharper when high frequency components increase.
However, depending on the taking lens, since there are differences in the peak characteristics of MTF (Modulation Transfer Function) between individual frequency bands extracted from subject image data, the peak position of evaluation values may vary between the individual frequency bands. For example, as shown in Fig. 20, with respect to three frequencies that are 0.1 times (0.1 fn), 0.3 times (0.3 fn), and 0.4 times (0.4 fn) of the Nyquist frequency, the image surface position at which the MTF becomes maximum may vary between these frequencies. Therefore, when a typical high-pass filter for extracting components in a broad high frequency band is used, the peaks of evaluation values using high frequency components are dispersed due to the variations in MFT between individual frequency bands, which may make peak detection impossible and make it difficult to detect the focusing position of the focus lens.
Further, depending on the subject, the contrast may be relatively low, and relatively few high frequency components are contained in the image. In such a case, a peak is detected from a low frequency component (0.1 fn), and a shift occurs at a high frequency peak (0.3 fn or more) matched to the human visual characteristic, which makes it difficult to perform proper focusing with respect to the subject.
With regard to the above-mentioned problem, it is conceivable to perform AF control by using a plurality of filters having mutually different frequency characteristics to extract components in a plurality of mutually different frequency bands from a subject image. However, it is difficult to determine which one of the frequency components is to be used in performing AF control.
In view of the above-mentioned problem, there is proposed a technique according to which, on the basis of evaluation values for each individual one of a plurality of mutually different high frequency bands, distances (moving distances) by which the focus lens is to be moved to reach the focusing position are respectively calculated, and a plurality of goodnesses of fit are determined from the plurality of moving distances and a membership function with a plurality of high frequency bands as variables, thereby determining the moving distance of the focus lens (for example, Japanese Unexamined Patent Application Publication No. 05-308556).

Disclosure of Invention

However, according to the technique proposed in Japanese Unexamined Patent Application Publication No. 05-308556, it is difficult to determine the membership function and hence to perform high-precision AF control.
The present invention has been made in view of the above-mentioned problems, and accordingly it is an object of the present invention to provide a technique that makes it possible to realize high-precision focusing control with respect to various kinds of subject.
In order to overcome the above-mentioned problems, the invention according to Claim 1 relates to a focusing control device for performing focusing control of an imaging apparatus, including: image acquiring means for time-sequentially acquiring a plurality of pieces of image data on the basis of light from a subject incident though an optical lens while driving the optical lens along an optical axis; evaluation value acquiring means for processing the plurality of pieces of image data respectively by using a plurality of filters having mutually different frequency characteristics to acquire an evaluation value set for each filter constituting the plurality of filters; and focusing detection means for detecting a focusing position of the optical lens by using an evaluation value set, which is acquired by processing using a predetermined filter of the plurality of filters in the evaluation value acquiring means, preferentially over evaluation value sets acquired by processing using other filters of the plurality of filters different from the predetermined filter.

Further, the invention according to Claim 2 relates to the focusing control device as defined in Claim 1, in which the predetermined filter has a frequency characteristic of emphasizing and extracting a high frequency band component relative to other filters of the plurality of filters different from the predetermined filter.

Further, the invention according to Claim 2 relates to the focusing control device as defined in Claim 1, in which the focusing detection means detects the focusing position by preferentially using an evaluation value set acquired by a filter of the plurality of filters which has a frequency characteristic of emphasizing and extracting a relatively high frequency band component.

Further, the invention according to Claim 2 relates to the focusing control device as defined in Claim 1, in which the predetermined filter has a frequency characteristic of emphasizing and extracting a predetermined frequency band component relative to other filters of the plurality of filters different from the predetermined filter.

Further, the invention according to Claim 5 relates to the focusing control device as defined in any one of Claims 1 to 4, further including: phase difference detection means for detecting a focusing position of the optical lens by using a phase difference method; and light splitting means for splitting light from the subject into first and second optical paths through which the light is respectively guided to the focusing detection means and the phase difference detection means, in which focusing control using the phase difference detection means, and focusing control using the focusing detection means are executed in parallel.

Further, the invention according to Claim 6 relates to the focusing control device as defined in Claim 5, in which the focusing detection means has a focusing surface at a different optical position relative to a focusing surface associated with the phase difference detection means, and the focusing control device further includes timing control means for starting focusing control using the focusing detection means after starting focusing control using the phase difference detection means.

Further, the invention according to Claim 7 includes the focusing control device as defined in any one of Claims 1 to 6.

According to the invention as defined in Claim 1, evaluation values acquired by using a predetermined filter of a plurality of filters are used preferentially in detecting the focusing position of the optical lens. Accordingly, for example, when a predetermined filter that emphasizes and extracts frequency components that increase when shooting a typical subject is set to be used preferentially, it is possible to realize high-precision focusing control with respect to various kinds of subject.

According to the invention as defined in any one of Claims 2 and 3 as well, the focusing position of the optical lens is detected by preferentially using evaluation values acquired by using a predetermined filter of the plurality of filters which emphasizes and extracts relatively high frequency band components. Therefore, for example, it is possible to perform focusing control in conformity to the human visual characteristic of perceiving a subject image as being sharper when high frequency components increase, thereby enabling high-precision focusing control.

According to the invention as defined in Claim 4, the focusing position of the optical lens is detected by preferentially using evaluation values acquired by using a predetermined filter having a frequency characteristic of emphasizing and extracting predetermined frequency band components relative to other filters of the plurality of filters. Therefore, for example, it is possible to perform focusing control with an emphasis on predetermined high frequency band components that increase when a captured image of a typical subject is in focus, thereby enabling high-precision focusing control.

According to the invention as defined in Claim 5, light from a subject is split into two optical paths, and focusing control based on the phase difference method and focusing control based on the contrast method are carried out in parallel by using the respective split light beams. Accordingly, for example, it is possible to drive the optical lens to the vicinity of the lens focusing position in a short time by focusing control based on the phase difference method, while ensuring the precision of focusing control by means of focusing control based on the contrast system. Fast and precise focusing control can be thus performed.

According to the invention as defined in Claim 6, the optical positions of the focusing surfaces associated with focusing detection based on the phase difference method and focusing detection based on the contrast method are made to mutually differ, and focusing control based on the contrast method is started after focusing control based on the phase difference method is started. Due to this configuration, focusing controls based on two different methods are performed simultaneously, and the lens focusing position of the focus lens can be detected by the focusing control based on the contrast method before a focused state is realized by the focusing control based on the phase difference method. As a result, it is possible to realize fast and high-precision focusing control. Since focusing control can be effected without moving the focus lens in the reverse direction, for example, it is possible to prevent the problem of backlash. Further, it is possible to perform focusing control so as to allow a subject viewed through a viewfinder or the like to smoothly change from a blurred state to a focused state, thereby achieving improved focusing feel.

According to the invention as defined in Claim 7, the same effect as that of the invention as defined in each of Claims 1 to 6 can be attained.

Brief Description of the Drawings

Fig. 1 is a schematic sectional view showing the general configuration of an imaging apparatus according to an embodiment of the present invention.

Fig. 2 is a view schematically illustrating the configuration of a focusing control unit.

Fig. 3 is a view for explaining the principle of focusing control based on the phase difference method.

Fig. 4 is a view for explaining the principle of focusing control based on the phase difference method.

Fig. 5 is a view for explaining the principle of focusing control based on the phase difference method.

Fig. 6 is a block diagram illustrating the functional configuration of an imaging apparatus.

Fig. 7 is a block diagram illustrating the main functional configuration of an AF circuit.

Fig. 8 is a diagram illustrating the frequency characteristics of filters.

Fig. 9 is a diagram illustrating the frequency components of image data inputted to an AF circuit.

Fig. 10 is a flow chart illustrating a shooting operation flow in an imaging apparatus.

Fig. 11 is a flow chart illustrating a shooting operation flow in an imaging apparatus.

Fig. 12 is a flow chart illustrating a shooting operation flow in an imaging apparatus.

Fig. 13 is a flow chart illustrating a shooting operation flow in an imaging apparatus.

Fig. 14 is a diagram illustrating a timing chart of focusing control in an imaging apparatus.

Fig. 15 is a diagram illustrating a timing chart of focusing control in an imaging apparatus.

Fig. 16 is a diagram showing the frequency characteristics of filters according to a modification.

Fig. 17 is a flow chart showing a shooting operation flow according to a modification.

Fig. 18 is a diagram showing the frequency characteristics of filters according to a modification.

Fig. 19 is a view schematically illustrating the configuration of a focusing control unit according to a modification.

Fig. 20 is a diagram for explaining variations in MTF between frequency components.

Best Mode for Carrying Out the Invention

An embodiment of the present invention will now be described with reference to the drawings.

<Overview of Imaging Apparatus>

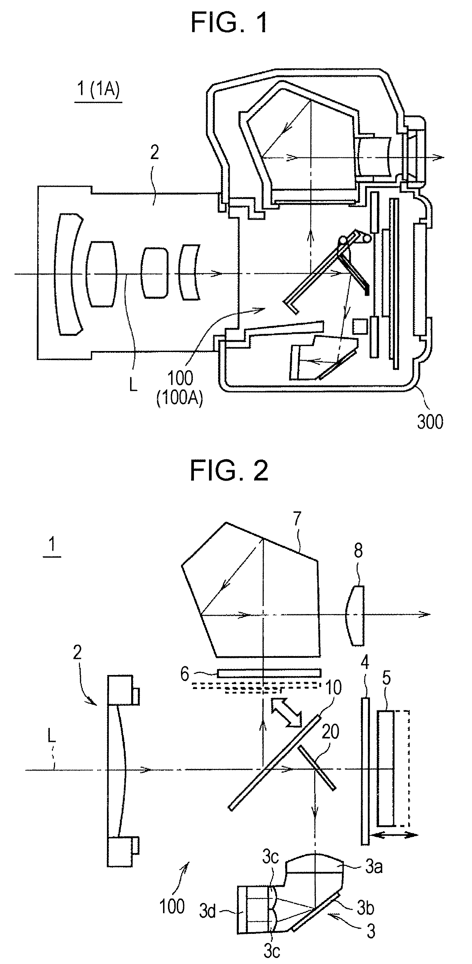

Fig. 1 is a schematic sectional view showing the general configuration of an imaging apparatus 1 according to an embodiment of the present invention

As shown in Fig. 1, the imaging apparatus 1 is configured as a so-called single-lens reflex digital camera, with which captured image data (captured image) associated with a subject can be obtained by guiding light from the subject to an imaging apparatus body 300 via a taking lens unit 2. A unit (hereinafter referred to as "AF control unit" as well as "focusing control device") 100 for performing an auto-focus (AF) control in the imaging apparatus 1 is mounted in the imaging apparatus body 300. In the taking lens unit 2, a lens group having a plurality of taking lenses including lenses (focus lenses) for realizing AF control are disposed on the optical axis L of the taking lens unit 2.

Fig. 2 is a schematic view focusing on the configuration associated with the AF control unit 100 of the imaging apparatus 1.

The AF control unit 100 mainly includes a main mirror 10, a sub mirror 20, a shutter mechanism 4, a C-MOS sensor (hereinafter referred to as "C-MOS") 5 as an imaging device, and a phase difference AF module 3.

The main mirror 10 is formed by a half mirror, and reflects a part of light from a subject toward an upper portion of the imaging apparatus body 300, thus guiding reflected light (hereinafter also referred to as "first reflected light") to a viewfinder optical system. Specifically, the main mirror 10 reflects light from a subject to project a subject image onto a viewfinder focusing screen 6. This subject image is changed into an erected image by a pentaprism 7. The subject image can be checked by the user through an eyepiece lens 8. The main mirror 10 transmits a part of light from the subject toward the sub mirror 20.

The sub mirror 20 is formed by a half mirror. Of light from a subject, the light that has transmitted through the main mirror (hereinafter also referred to as "first transmitted light") is reflected by the sub mirror 20 toward a lower portion of the imaging apparatus body 300, thus guiding the light to the phase difference AF module 3. On the other hand, the sub mirror transmits a part of the first transmitted light toward the C-MOS 5. That is, the sub mirror 20 splits (branches) the optical path of light from a subject into two optical paths through which light is guided to the phase difference AF module 3 and the C-MOS 5, respectively.

The phase difference AF module 3 is a unit for performing focusing detection using a phase difference method. The phase difference AF module 3 includes a condenser lens 3a, a mirror 3b, a separator lens 3c, and a phase difference detection device 3d.

The condenser lens 3a guides the light reflected by the sub mirror 20 (hereinafter also referred to as "second reflected light") to the interior of the phase difference AF module 3. The mirror 3b bends the direction of the second reflected light toward the separator lens 3c. The separator lens 3c is a pupil division lens for performing phase difference detection, and performs pupil division on the second reflected light for projection onto the phase difference detection device 3d.

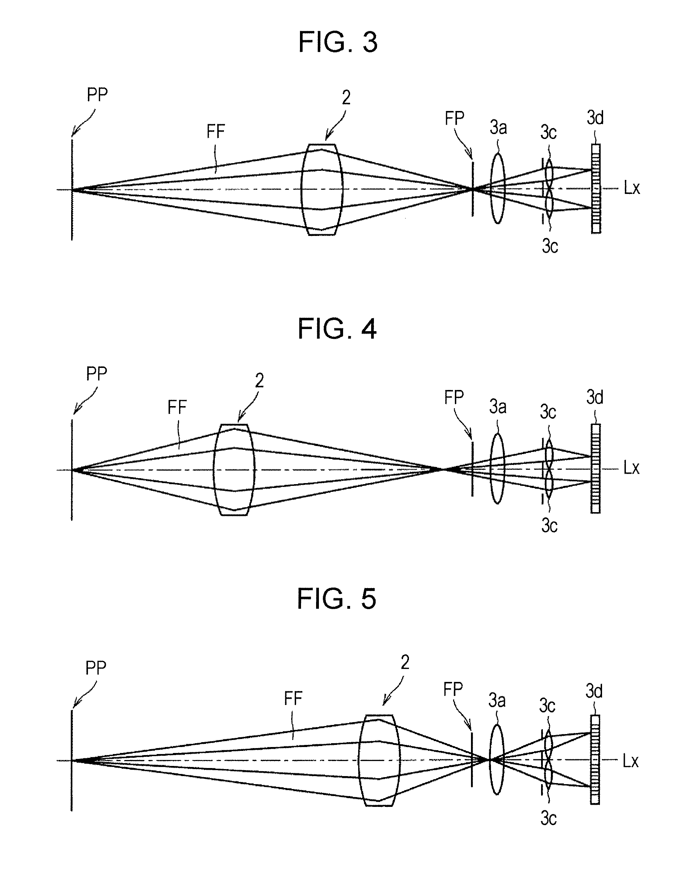

Figs. 3 to 5 are diagrams for explaining the principle of focusing control according to the phase difference method. As shown in Figs. 3 to 5, in the focusing control according to the phase difference method, light beams FF emitted from the surface (subject surface) PP of a subject to be focused are guided to the phase difference detection device 3d via the tanking lens unit 2, the condenser lens 3a, and the separator lens 3c. At this time, a phase difference between two subject images detected by the phase difference detection device 3d, that is, a displacement of image spacing, is measured to determine a defocus amount. In this case, the defocus amount is determined so that the beams are focused on a surface (hereinafter also referred to as "equivalent imaging surface") equivalent to the imaging surface of the C-MOS 5 set at the imaging home position described later. That is, the equivalent imaging surface FP is configured as a surface (hereinafter also referred to as "first focusing surface") on which a subject image focused by AF control based on the phase difference method (phase difference AF control) is formed.

It should be noted that for example, when focusing is performed with respect to a subject as shown in Fig. 3, the image spacing is a predetermined value set at the time of design of the phase difference AF module 3. However, the image spacing becomes narrow in the case of front focus as shown in Fig. 4, and the image spacing becomes wide in the case of rear focus as shown in Fig. 5.

The shutter mechanism 4 can open/block the optical path of the light (hereinafter also referred to as "second transmitted light") that has transmitted through the sub mirror 20. By opening the optical path, the shutter mechanism 4 allows the second transmitted light to be radiated onto the C-MOS 5, thereby projecting a subject image onto the C-MOS 5.

Of light from a subject, the C-MOS 5 receives the second transmitted light to obtain an image signal. The image signal obtained by the C-MOS 5 is used for generating captured image data for recording, and also for performing so-called AF control based on the contrast method (contrast AF control) prior to the operation (actual shooting operation) of acquiring the captured image data for recording. The light-receiving surface (imaging surface) of the C-MOS 5 is configured as a surface (hereinafter also referred to as "second focusing surface") on which a subject image focused by contrast AF control is formed.

Since the C-MOS 5 is held so as to be movable with respect to the imaging apparatus body 300, the C-MOS 5 is movable back and forth along the optical axis L of the second transmitted light. Due to this back and forth movement of the C-MOS 5, the first and second focusing surfaces are set at mutually different optical positions.

It should be noted that the term "mutually different optical positions" as used herein means that when a subject image is in focus on the first focusing surface, the subject image is not in focus on the second focusing surface, and also that when a subject image is in focus on the second focusing surface, the subject image is not in focus on the first focusing surface.

<Configuration of Imaging Apparatus>

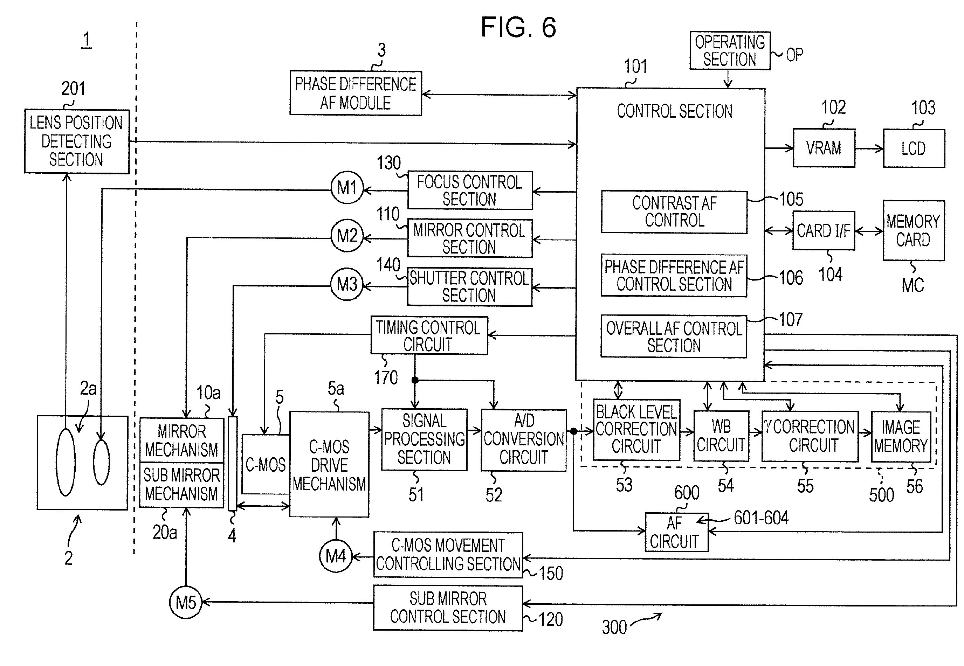

Fig. 6 is a block diagram illustrating the functional configuration of the imaging apparatus 1 according to a first embodiment of the present invention.

As shown in Fig. 6, the imaging apparatus 1 includes the taking lens unit 2, the phase difference AF module 3, the C-MOS 5, a mirror mechanism 10a, a sub mirror mechanism 20a, a control section 101, a lens position detecting section 201, an operating section OP, a C-MOS movement controlling section 150, a focus control section 130, a signal processing circuit 500, an AF circuit 600, and the like.

The taking lens unit 2 includes an optical lens (focus lens) 2a for realizing a focused state such that a subject comes into focus in an image signal acquired by the C-MOS 5, and the like. The focus lens 2a is movable back and forth along the lens optical axis. The lens position of the focus lens 2a is moved as a motor M1 is driven in response to a control signal from the focus control section 130. The focus control section 130 generates a control signal on the basis of a control signal inputted from the control section 101. The position of the focus lens 2a is detected by the lens position detecting position 201, and data indicative of the position of the focus lens 2a is sent to the control section 101.

The mirror mechanism 10a is a mechanism including the main mirror 10 that is retractable from the path of light (optical path) from a subject. As a motor M2 is driven in response to a control signal from a mirror control section 110, the mirror mechanism 10a is set to a state in which the main mirror 10 is retracted from the optical path (mirror-up state) or to a state in which the main mirror 10 blocks the optical path (mirror-down state). The mirror control section 110 generates a control signal on the basis of a signal inputted from the control section 101.

The mirror mechanism 20a is a mechanism including the sub mirror 20 that is retractable from the path of light from a subject. As a motor M5 is driven in response to a control signal from a sub mirror control section 120, the sub mirror mechanism 20a is set to a state in which the sub mirror 20 is retracted from the optical path (mirror-up state) or to a state in which the sub mirror 20 blocks the optical path (mirror-down state). The sub mirror control section 120 generates a control signal on the basis of a signal inputted from the control section 101.

The shutter mechanism 4 is a mechanism that can block/open the path of light from a subject. The shutter mechanism 4 opens and closes as a motor M3 is driven in response to a control signal from a shutter control section 140. The shutter control section 140 generates a control signal on the basis of a signal inputted from the control section 101.

The C-MOS 5 performs imaging (photoelectric conversion), and generates an image signal corresponding to a captured image. In response to a drive control signal (storage start signal/storage termination signal) inputted from a timing control circuit 170, the C-MOS 5 performs exposure (charge storage by photoelectric conversion) on a subject image formed on the light-receiving surface, thereby generating an image signal corresponding to that subject image.

Further, the C-MOS 5 outputs the above-mentioned image signal to a signal processing section 51 in response to an AF control signal inputted from the timing control circuit 170. The timing control circuit 170 generates various kinds of control signal on the basis of a signal inputted from the control section 101. A timing signal (synchronization signal) from the timing control circuit 170 is inputted to the signal processing section 51 and an A/D conversion circuit 52.

The C-MOS 5 is moved back and forth along the optical axis of light from a subject by means of a C-MOS drive mechanism 5a. As a motor M4 is driven in response to a control signal from the C-MOS movement controlling section 150, the C-MOS drive mechanism 5a moves the C-MOS 5 back and forth along the optical axis of the light from the subject. The C-MOS movement controlling section 150 generates a control signal on the basis of a signal inputted from the control section 101.

The signal processing section 51 performs predetermined analog signal processing on an image signal supplied from the C-MOS 5, and the processed image signal is converted by the A/D conversion circuit 52 into digital image data (image data). This image data is inputted to the signal processing circuit 500, and is also supplied to the AF circuit 600 for contrast AF control whenever necessary.

The signal processing circuit 500 performs digital signal processing on image data inputted from the A/D conversion circuit 52, thus generating image data corresponding to a captured image. The signal processing in the signal processing circuit 500 is performed for each of pixel signals constituting an image signal. The signal processing circuit 500 includes a black-level correction circuit 53, a white balance (WB) circuit 54, a γ correction circuit 55, and an image memory 56. Of these components, the black-level correction circuit 53, the white balance (WB) circuit 54, and the γ correction circuit 55 perform digital signal processing.

The black-level correction circuit 53 corrects the black level of each pixel data constituting image data outputted by the A/D conversion circuit 52 to a reference black level. The WB circuit 54 performs white balance adjustment of an image. The γ correction circuit 55 performs tone conversion of a captured image. The image memory 56 is an image memory capable of high-speed access for temporarily recording generated image data. The image memory 56 has a capacity allowing storage of plural frames of image data.

When performing contrast AF control, the AF circuit 600 acquires image data corresponding to an area (AF area) of image data, extracts predetermined frequency band components from this image data, and calculates the sum of the extracted components as a value (AF evaluation value) for evaluating the focusing state of a subject. The AF evaluation value calculated by the AF circuit 600 is outputted to the control section 101.

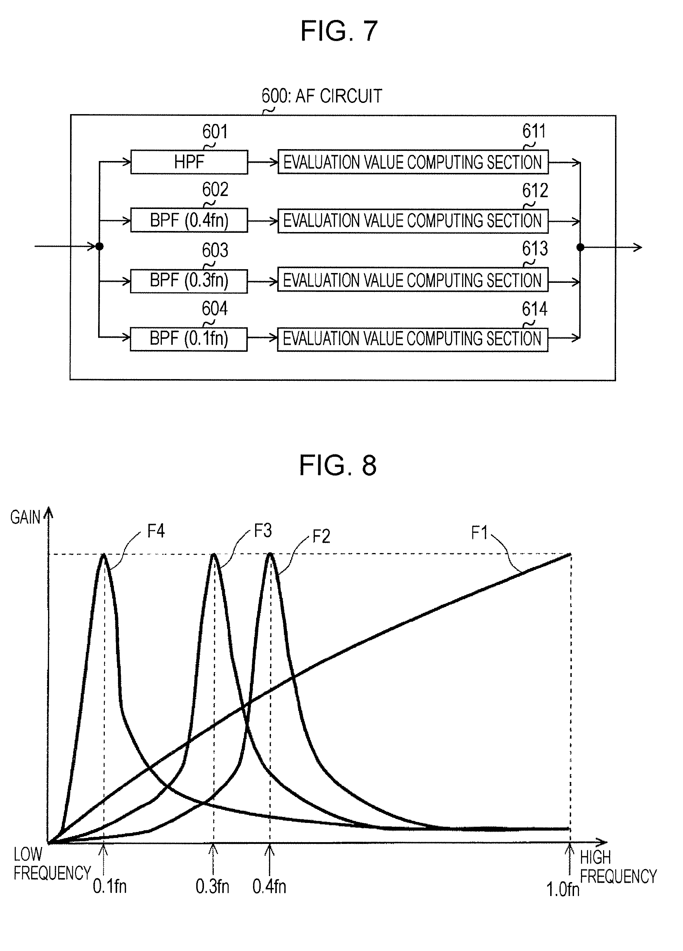

Fig. 7 is a block diagram illustrating the main functional configuration of the AF circuit 600.

As shown in Fig. 7, the AF circuit 600 has four filters 601 to 604 having mutually different frequency characteristics. The frequency characteristics of the respective filters 601 to 604 are shown in Fig. 8.

In Fig. 8, the horizontal axis indicates frequency, and the vertical axis indicates gain. Curves F1 to F4 respectively indicate the frequency characteristics of the filters 601 to 604. "fn" in Fig. 8 indicates a Nyquist frequency, that is, a frequency that is half of the sampling frequency. A high frequency equal to or higher than fn is a critical frequency that cannot be reconstructed in principle. It should be noted that since a sampling frequency whose one cycle is set as the pixel spacing of an image obtained by all the pixels of an imaging device is adopted, a frequency whose one cycle is set as the spacing of two pixels is set as the Nyquist frequency.

As indicated by the curve F1, the filter 601 is a typical high-pass filter (hereinafter also referred to as "HPF") for extracting (transmitting) components in a broad high frequency band. Further, as indicated by the curve F2, the filter 602 is a band-pass filter (hereinafter also referred to as "BPF (0.4 fn)") for mainly extracting (transmitting) components in a frequency band in the vicinity of 0.4 fn. Further, as indicated by the curve F3, the filter 603 is a band-pass filter (hereinafter also referred to as "BPF (0.3 fn)") for mainly extracting (transmitting) components in a frequency band in the vicinity of 0.3 fn. Further, as indicated by the curve F4, the filter 604 is a band-pass filter (hereinafter also referred to as "BPF (0.1 fn)") for mainly extracting (transmitting) components in a frequency band in the vicinity of 0.1 fn.

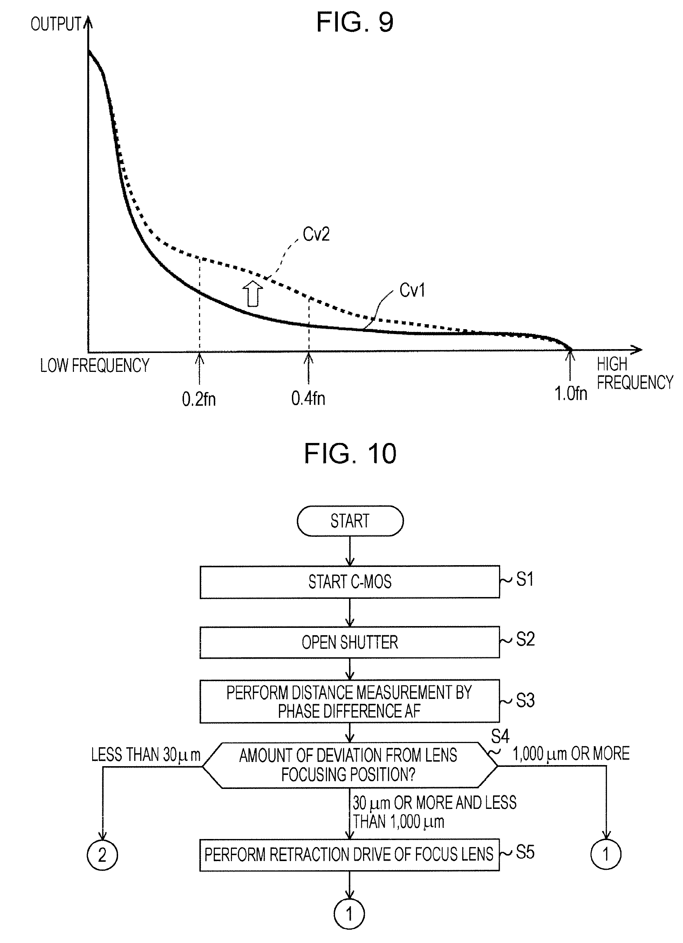

Fig. 9 is a diagram illustrating the distribution (output distribution) of the spatial frequency of image data outputted from the A/D conversion circuit 52 to the AF circuit 600. In Fig. 9, the horizontal axis indicates frequency, and the vertical axis indicates output. Curves Cv1, Cv2 each represent the output distribution of special frequency of image data. During typical shooting, although depending on the setting as well, as subjects with definite contours increase, high frequency components in the vicinity of 0.2 fn to 0.4 fn increase in output as indicated by the curves Cv1, Cv2.

In each of the filters 601 to 604, the special frequency outputs of image data as shown in Fig. 9 are respectively multiplied by the frequency characteristics shown in Fig. 8 before being outputted. Then, in evaluation-value computing sections 611 to 614, on the basis of the outputs from the respective filters 601 to 604, respective AF evaluation values are calculated. Therefore, in the AF circuit 600, one image data is processed by using the four filters 601 to 604 with mutually different frequency characteristics, and AF evaluation values focusing on four different frequency bands are respectively acquired by the evaluation-value computing sections 611 to 614.

When performing contract AF control, a plurality of pieces of image data are acquired by using the C-MOS 5 or the like while moving the focus lens 2a back and forth along the lens optical axis, and in the AF circuit 600, a plurality of corresponding AF evaluation values (AF evaluation value set) are acquired for each of the filters 601 to 604. That is, four AF evaluation value sets respectively corresponding to the four filters 601 to 604 are acquired in a substantially parallel fashion.

In other words, an AF evaluation value set obtained by using the HPF 601 with an emphasis on components in a broad high frequency band, a plurality of AF evaluation value sets obtained by using the BPF (0.4 fn) 602 with an emphasis on components in a frequency band in the vicinity of 0.4 fn, a plurality of AF evaluation value sets obtained by using the BPF (0.3 fn) 603 with an emphasis on components in a frequency band in the vicinity of 0.3 fn, and a plurality of AF evaluation value sets obtained by using the BPF (0.1 fn) 604 with an emphasis on components in a frequency band in the vicinity of 0.1 fn can be acquired substantially simultaneously.

The control section 101 mainly includes a CPU, a memory, a ROM, and the like. Various functions and controls are realized by reading programs stored in the ROM and executing them by the CPU. Specifically, the control section 101 includes a contrast AF control section 105 as the function for executing contrast AF control, a phase difference AF control section 106 as the function for executing phase difference AF control, and an overall AF control section 107 as the function for performing centralized control of the overall AF control.

When performing contrast AF control, with respect to an AF evaluation value set that is given a higher priority in accordance with predetermined rules than other ones of the plurality of AF evaluation value sets inputted from the AF circuit 600, the contrast AF control section 105 determines the lens position of the focus lens 2a where the AF evaluation value becomes maximum as the position (lens focusing position) where the focused state of a subject is achieved. Further, the contrast AF control section 105 outputs a control signal corresponding to the determined lens focusing position to the focus control section 130, and moves the focus lens 2a to the lens focusing position.

When performing phase difference AF control, the phase difference AF control section 106 detects the lens focusing position of the focus lens 2a on the basis of the result of detection in the phase difference AF module 3. Then, the phase difference AF control section 106 outputs to the focus control section 130 a control signal corresponding to the lens focusing position determined as appropriate, and moves the focus lens 2a to the lens focusing position.

The overall AF control section 107 causes the contrast AF control and the phase difference AF control to be executed as appropriate.

The operating section OP includes a shutter start button (shutter button), various buttons and switches, and the like. In response to an input operation by the user with respect to the operating section OP, various operations are realized by the control section 101. It should be noted that the shutter button is a two-stage detection button capable of detecting two states including a half-press state (S1 state) and a full-press state (S2 state). It should be noted that in the imaging apparatus 1, preparatory operations for an actual shooting operation including AF control are performed when the S1 state is entered, and the actual shooting operation is performed when the S2 state is entered.

Image data temporarily stored into the image memory 56 is transferred to a VRAM 102 as appropriate by the control section 101, so an image based on the image data is displayed on a liquid display section (LCD) 103 arranged in the back surface of the image apparatus body 300.

Further, at the time of actual shooting, image data temporarily stored in the image memory 56 undergoes image processing in the control section 101 as appropriate, and is stored into a memory card MC via a card I/F 104.

<Operation of Imaging Apparatus>

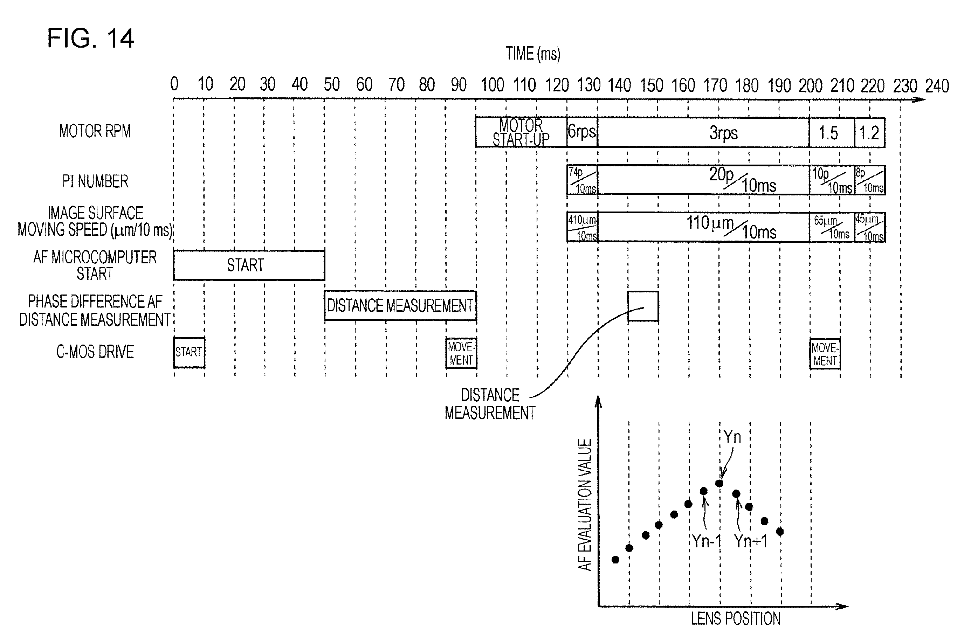

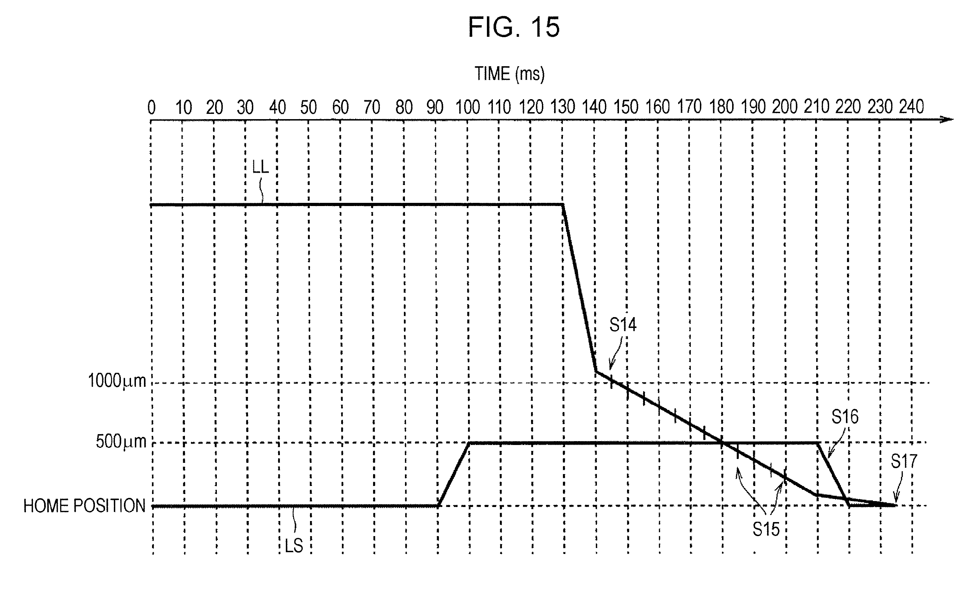

Figs. 10 to 13 are flow charts each illustrating a shooting operation flow in the imaging apparatus 1. This operation flow is realized through control by the control section 101. Figs. 14 and 15 are diagrams each illustrating a timing chart of AF control.

In Figs. 14 and 15, the horizontal axis indicates the passage of time after the state S1 is entered. Further, Fig. 14 shows, in order from above, motor RPM of the motor M1, the number of pulses (PI number) inputted to the motor M1, image-surface moving speed corresponding to the moving speed of the focus lens 2a, start of an AF microcomputer, distance measurement by phase difference AF, and C-MOS 5 drive timing. Further, shown at the bottom of Fig. 14 are the exposure timing of the C-MOS 5 for obtaining AF evaluation values in contrast AF control, and the relationship between the position of the focus lens 2a and the AF evaluation values.

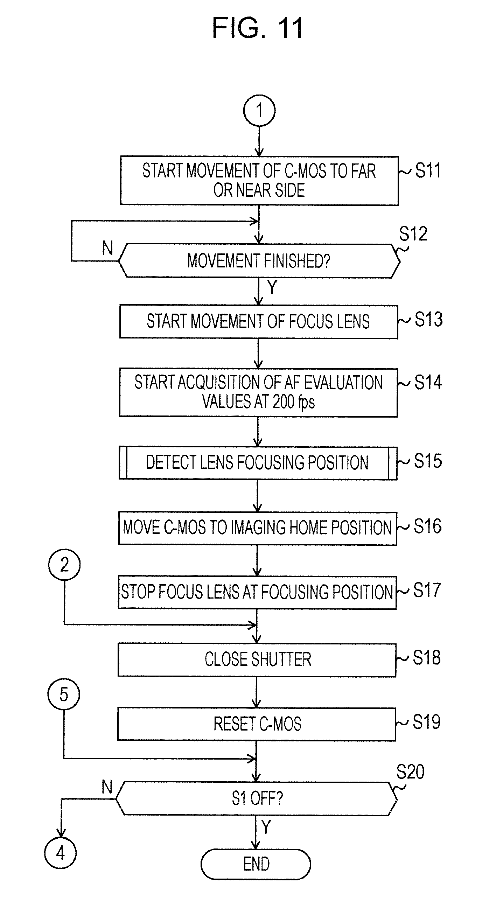

Fig. 15 shows a broken line LL indicating the position (that is, the movement) of the focus lens 2a, and a broken line LS indicating the position (that is, the movement) of the imaging surface (that is, the second focusing surface) of the C-MOS 5. It should be noted that with regard to the vertical axis direction of Fig. 15, although numerical values corresponding to the position of the broken line LL are omitted, numerical values (such as 500 μm) corresponding to the broken line LS are attached. Further, in Fig. 15, with respect to the broken line LL, marks (short vertically extending line segments) indicating lens positions corresponding to the exposure timings for obtaining AF evaluation values are attached, and step numbers (for example, step S14 or the like) are attached to portions corresponding to respective process steps shown in Fig. 11.

Now, referring to Figs. 14 and 15 as appropriate, the shooting operation flow will be described. It should be noted that at the time when this shooting operation flow is started, the C-MOS 5 is set at a predetermined reference position (also referred to as "imaging home position") for performing the actual shooting operation, and the optical positions of the first and second focusing surfaces are set to be the same.

First, when the shutter button is pressed halfway down and the S1 state is entered, the shooting operation flow is started, and the process advances to step S1 of Fig. 10.

In step S1, the C-MOS 5 is started (0 to 10 ms in Fig. 14). At this time, the C-MOS 5 is energized, and the timing control circuit 170 outputs a control signal in response to a signal from the control section 101, so the C-MOS 5 starts readout of charge signals at 200 fps. It should be noted that since a subject can be viewed through the optical viewfinder in the imaging apparatus 1, for the purpose of power saving, the C-MOS 5 is started when the S1 state is entered.

In step S2, the shutter mechanism 4 is opened to perform contrast AF control. It should be noted that before the S1 state is entered, that is, in the stand-by state, the shutter mechanism 4 is in a closed state.

During the processing of steps S1 and S2 mentioned above, the contrast AF control section 105, the phase difference AF control section 106, and the overall AF control section 107 as the functions of the AF microcomputer, that is, the control section 101 are started (0 to 50 ms in Fig. 14).

In step S3, a distance measurement by phase difference AF control is performed by the phase difference AF module 3 and the phase difference AF control section 106 (50 to 100 ms in Fig. 14).

In step S4, on the basis of the result of the distance measurement in step S3, the deviation between the current position of the focus lens 2a and the lens focusing position is determined by the overall AF control section 107. At this time, if the absolute value of the deviation is less than a first predetermined value (for example, 30 μm), it is determined that the focused state of a subject has already been achieved, and the process advances to step S18 of Fig. 11. That is, the process transfers to the actual shooting operation without carrying out AF control. Further, if the absolute value of the deviation is equal to or larger than a second predetermined value (for example, 1,000 μm), it is determined that the deviation is sufficient, and the process transfers to step S11 of Fig. 11 as it is. Further, if the absolute value of the deviation is equal or larger than the first predetermined value and less than the second predetermined value, it is determined that the deviation is insufficient, and the process advances to step S5.

In step S5, the focus lens 2a is driven to retract as the motor M1 is driven on the basis of a control signal from the focus control section 130 under the control of the overall AF control section 107. In this regard, if the deviation is insufficient, the peak of AF evaluation value in the contrast AF control is passed as the second focusing surface is moved as will be described later. In order to avoid this problem, a retraction drive is performed to move the lens position of the focus lens 2a so as to ensure a sufficient deviation. It should be noted that in this retraction drive, for example, the focus lens 2a is moved to one end of the movable range of the focus lens 2a.

In step S11, on the basis of the result of distance measurement in step S3, an operation of moving the C-MOS 5 to the far side (paying-out side) or the near side (paying-in side) is started (90 mn in Fig. 14). At this time, in accordance with the distance measurement value obtained as a result of detection by the phase difference AF module 3, if a subject is located on the far side from the current focus position (location where the subject is in focus) with reference to the imaging apparatus 1, the C-MOS 5 is moved closer to the subject. On the other hand, if the subject is on the near side from the current focus position (location where the subject is in focus), the C-MOS 5 is moved away from the subject. It should be noted that the movement of the C-MOS 5 is performed at a speed of, for example, 20 to 30 mm/sec.

In step S12, it is determined whether or not the movement of the C-MOS 5 started in step S11 has been finished. At this time, the determination of step S12 is repeated until the C-MOS 5 moves by a predetermined distance (for example, 500 μm), and when the C-MOS 5 has moved by the predetermined distance, the movement of the C-MOS 5 is finished (90 to 100 ms in Figs. 14 and 15).

It should be noted that the predetermined distance is set as appropriate in accordance with the optical design of the imaging apparatus 1. Further, the predetermined distance is set as appropriate in accordance with the lens focal length (the larger the lens focal length, the larger the predetermined distance) of the taking lens unit 2, and the movement ratio of the focal lens unit 2a (the larger the amount of movement of the focus lens 2a relative to the RPM of the focus motor M1, the larger the predetermined distance).

As described above, in steps S11 and S12, the optical position of the second focusing surface is moved to a different position relative to that of the first focusing surface. Specifically, in accordance with the result of detection by the phase difference AF module 3, the state in which the optical positions of the first and second focusing surfaces are set the same is changed to a state in which, when performing AF control while moving the position of the focus lens 2a, the focused state of a subject is realized on the second focusing surface earlier than on the first focusing surface. That is, the focused state of a subject is set to be detected by contrast AF control before the focusing point is reached by phase difference AF control.

In step S13, the motor M1 is started up, and the movement of the focus lens 2a is started (100 to 130 ms in Fig. 14). The movement of the focus lens 2a is performed in accordance with phase difference AF control.

In step S14, under the control of the overall AF control section 107, contrast AF control is started, and an operation of acquiring AF evaluation values at the timing of 200 fps is started (145 ms in Figs. 14 and 15). In this case, the operation of acquiring AF evaluation values is performed at the time when the image surface moving speed has become somewhat slow, such as 110 $\mu$m/10 ms. It should be noted that this contrast AF control is executed in a state with the aperture open, for example.

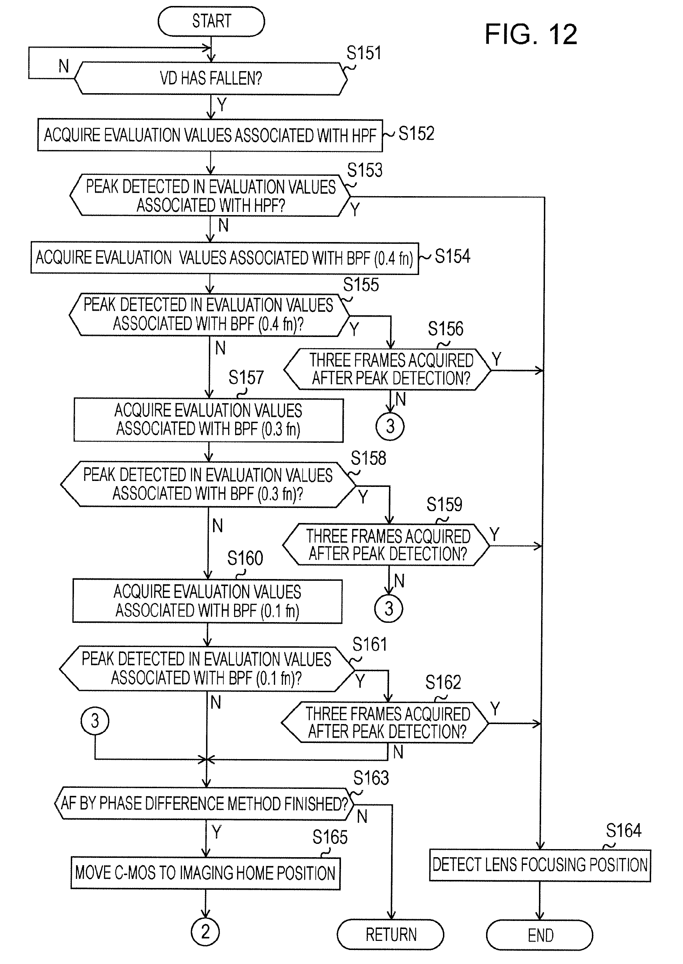

In step S15, the lens focusing position is detected. Specifically, when the process advances to step S15, the process then advances to step S151 of Fig. 12, and the operation of detecting the lens focusing position shown in Fig. 12 is executed (145 to 200 ms in Figs. 14 and 15).

Now, the operation of detecting the lens focusing position shown in Fig. 12 will be described.

As described above with reference to Fig. 20, depending on the taking lens, the peak of AF evaluation values may vary between individual frequency bands due to differences in the peak characteristics of MTF between individual frequency bands extracted from image data. If the HPF 601 for extracting components in a broad high frequency band is used in such a case, due to the deviation in MTF between the individual frequency bands, the peak of AF evaluation values acquired by using the HPF 601 does not become sharp, which makes it difficult to detect the lens focusing position of the focus lens 2a.

With regard to this problem, even when there are variations in MTF between individual frequency bands, if AF evaluation values are obtained with an emphasis on high frequency components within a narrow frequency band, the AF evaluation values exhibit a sharp peak. Accordingly, it is conceivable to calculate AF evaluation values by using a band-pass filter (BPF) for extracting components in a specific frequency band, and find the lens focusing position corresponding to the peak of the AF evaluation values.

However, when AF evaluation values are obtained by using the BPF, if there is a slight deviation between the specific frequency band emphasized by the BPF in extracting components and the band of a large number of high frequency components contained in image data, it is impossible to detect the peak of AF evaluation value.

Accordingly, in the operation of detecting the lens focusing position in the imaging apparatus 1, first, in a straightforward manner, if a peak of AF evaluation value can be detected with respect to AF evaluation values obtained by using the HPF 601 that extracts components in a broad high frequency band, a lens position corresponding to this peak of AF evaluation value is detected as the lens focusing position. If a peak cannot be detected with respect to the AF evaluation values obtained by using the HPF 601, in conformity to the human visual characteristic of perceiving a subject image as being sharper when high frequency components increase, peak detection is performed with respect to AF evaluation values obtained by employing BPFs in order from a BPF that emphasizes relatively high frequency components, and a lens position corresponding to this AF evaluation value peak is detected as the lens focusing position.

That is, according to the detecting operation of the focusing position in the imaging apparatus 1, of the four filters 601 to 604, detection of a lens focusing position corresponding to detection of a peak in the AF evaluation values obtained by using the HPF 601 is given the highest priority. The second highest priority is given to detection of a lens focusing position corresponding to detection of a peak in the AF evaluation values obtained by using the BPF (0.4 fn) 602. Further, the third highest priority is given to detection of a lens focusing position corresponding to detection of a peak in the AF evaluation values obtained by using the BPF (0.3 fn) 603. Lastly, peak detection is performed with respect to the AF evaluation values obtained by using the BPF (0.1 fn) 604 that emphasizes comparatively the lowest frequency components, and if a peak can be detected, a lens focusing position corresponding to this peak is detected.

It should be noted that when the contrast of a subject is extremely low, it may be impossible to detect a lens focusing position by the above-mentioned contrast control using the four filters 601 to 64. In such a case, the imaging apparatus 1 adopts a lens focusing position determined by phase difference AF control.

Now, the detecting operation of the lens focusing position shown in Fig. 12 will be specifically described.

In step S151, it is determined whether or not a vertical synchronization signal (VD pulse) for each 200 fps timing corresponding to the image data acquisition rate (frame rate) in the C-MOS 5 has fallen. At this time, the determination of step S151 is repeated until the VD pulse falls, and when the VD pulse falls, the process then advances to step S152.

In step S152, the contrast AF control section 105 acquires AF evaluation values obtained by using the HPF 601, that is, the contrast AF control section 105 acquires AF evaluation values associated with the HPF 601. That is, the AF evaluation values associated with the HPF 601 are acquired in synchronization with the falling of the VD pulse.

In step S153, it is determined whether or not a peak of AF evaluation value has been found with respect to the AF evaluation values (that is, the AF evaluation value set) associated with the HPF 601. At this time, the process advances to step S164 if a peak of AF evaluation value is found, and the process advances to step S164 if a peak of AF evaluation value has not been found. It should be noted that Figs. 14 and 15 shows an example in which a peak of AF evaluation value is found.

In step S154, the contrast AF control section 105 acquires AF evaluation values obtained by using the BPF (0.4 fn) 602, that is, the contrast AF control section 105 acquires AF evaluation values associated with the BPF (0.4 fn) 602.

In step S155, it is determined whether or not a peak of AF evaluation value has been found with respect to the AF evaluation values (that is, the AF evaluation value set) associated with the BPF (0.4 fn) 602. At this time, the process advances to step S156 if a peak of AF evaluation value is found, and the process advances to step S157 if a peak of AF evaluation value has not been found.

In step S156, it is determined whether or not three frames of image data have been acquired since the detection of a peak of the AF evaluation values associated with the BPF (0.4 fn) 602. That is, it is determined whether or not the VD pulse has fallen three times and three frames of image data have been acquired in the C-MOS 5 since the detection of a peak of the AF evaluation values associated with the BPF (0.4 fn) 602. At this time, if three frames of image data have not been acquired since the detection of a peak of the AF evaluation values associated with the BPF (0.4 fn) 602, the process advances to step S163, and if three frames of image data have been acquired, the process advances to step S164.

In this regard, the reason why it is determined whether or not three frames of image data have been acquired is as follows. That is, since the peak of AF evaluation value may vary between individual frequency bands due to the frequency dependence of MFT shown in Fig. 20, there is a possibility that a peak is detected with respect to the AF evaluation values associated with the HPF 601, which are used preferentially over the AF evaluation values associated with the BPF (0.4 fn), while the position of the focus lens 2a is being slightly moved after a peak of the AF evaluation values associated with the BPF (0.4 fn) 602 is detected. In other words, the reason for determining whether or not three frames of image data have been acquired is to wait on standby to see whether or not a peak is detected for the AF evaluation values associated with the HPF 601 that emphasizes a higher frequency band than the BPF (0.4 fn) 602, in consideration of the frequency dependence of MTF.

Further, in the imaging apparatus 1, a period of time for acquiring three frames of image data is adopted as the period of time for which the image surface position is moved by a predetermined distance by moving the position of the focus lens 2a. If a peak is detected during that period with respect to the AF evaluation values (that is, the AF evaluation value set) obtained by using the HPF 601 that emphasizes a higher frequency band, a control is made to detect the lens focusing position on the basis of the AF evaluation values (that is, the AF evaluation value set) obtained by using the HPF 601.

In step S157, the contrast AF control section 105 acquires AF evaluation values obtained by using the BPF (0.3 fn) 603, that is, the contrast AF control section 105 acquires AF evaluation values associated with the BPF (0.3 fn) 603.

In step S158, it is determined whether or not a peak of AF evaluation value has been found with respect to the AF evaluation values (that is, the AF evaluation value set) associated with the BPF (0.3 fn) 603. At this time, the process advances to step S159 if a peak of AF evaluation value is found, and the process advances to step S160 if a peak of AF evaluation value has not been found.

In step S159, it is determined whether or not three frames of image data have been acquired since the detection of a peak of the AF evaluation values associated with the BPF (0.3 fn) 603. At this time, if three frames of image data have not been acquired since the detection of a peak of the AF evaluation values associated with the BPF (0.3 fn) 603, the process advances to step S163, and if three frames of image data have been acquired, the process advances to step S164.

It should be noted that as in step S156, the reason for determining whether or not three frames of image data have been acquired is to wait on standby to see whether or not a peak is detected for the AF evaluation values obtained by using the HPF 601 and the BPF (0.4 fn) 602 that emphasize higher frequency bands than the BPF (0.3 fn) 603, in consideration of the frequency dependence of MTF.

If a peak is detected during this standby period with respect to the AF evaluation values obtained by using either one of the HPF 601 and the BPF (0.4 fn) 602 that emphasize higher frequency bands than the BPF (0.3 fn) 603, a control is made to detect the lens focusing position on the basis of the AF evaluation values (that is, the AF evaluation value set) in which the peak has been detected.

In step S160, the contrast AF control section 105 acquires AF evaluation values obtained by using the BPF (0.1 fn) 604, that is, the contrast AF control section 105 acquires AF evaluation values associated with the BPF (0.1 fn) 604.

In step S161, it is determined whether or not a peak of AF evaluation value has been found with respect to the AF evaluation values (that is, the AF evaluation value set) associated with the BPF (0.1 fn) 604. At this time, the process advances to step S162 if a peak of AF evaluation value is found, and the process advances to step S163 if a peak of AF evaluation value has not been found.

In step S162, it is determined whether or not three frames of image data have been acquired since the detection of a peak of the AF evaluation values associated with the BPF (0.1 fn) 604. At this time, if three frames of image data have not been acquired since the detection of a peak of the AF evaluation values associated with the BPF (0.1 fn) 604, the process advances to step S163, and if three frames of image data have been acquired, the process advances to step S164.

It should be noted that as in steps S156, S159, the reason for determining whether or not three frames of image data have been acquired is to wait on standby to see whether or not a peak is detected for the AF evaluation values obtained by using the HPF 601, the BPF (0.4 fn) 602, and the BPF (0.3 fn) 603 that emphasize higher frequency bands than the BPF (0.1 fn) 604, in consideration of the frequency dependence of MTF.

If a peak is detected during this standby period with respect to the AF evaluation values obtained by using the HPF 601, the BPF (0.4 fn) 602, and the BPF (0.3 fn) 603 that emphasize higher frequency bands than the BPF (0.1 fn) 604, a control is made to detect the lens focusing position on the basis of the AF evaluation values (that is, the AF evaluation value set) for which the peak has been detected.

In step S163, it is determined whether or not phase difference AF control has been finished. At this time, if the phase difference AF control has not been finished, the process returns to step S151, and if the phase difference AF control has been finished, the C-MOS 5 returns to the imaging home position (step S165), and the process advances to step S18 of Fig. 11. At this time, the movement of the focus lens 2a also stops simultaneously with the finishing of the phase difference AF control.

In step S164, the lens focusing position is detected on the basis of AF evaluation values. At this time, if the process has advanced to step S164 from step S153, the lens focusing position is detected on the basis of the AF evaluation values (that is, the AF evaluation value set) associated with the HPF 601. If the process has advanced to step S164 from step S156, the lens focusing position is detected on the basis of the AF evaluation values (that is, the AF evaluation value set) associated with the BPF (0.4f) 602. If the process has advanced to step S164 from step S159, the lens focusing position is detected on the basis of the AF evaluation values (that is, the AF evaluation value set) associated with the BPF (0.3 fn) 603. If the process has advanced to step S164 from step S162, the lens focusing position is detected on the basis of the AF evaluation values (that is, the AF evaluation value set) associated with the BPF (0.1 fn) 604.

Now, the method of detecting a lens focusing position on the basis of AF evaluation values (that is, an AF evaluation value set) will be described.

First, as shown in Fig. 14, when the AF evaluation value starts to decrease after increasing, using data at three points including the maximum value $Yn$ of AF evaluation value and the AF evaluation values $Yn-1$, $Yn+1$ preceding and succeeding the maximum value $Yn$, the lens focusing position $P$ of the focus lens 2a where the AF evaluation value peaks is calculated by secondary interpolation approximate calculation shown in Formula (1) below.

[Formula 1]

$$\text{Lens focusing position } P = \frac{(Yn-1)\times\{(Xn+1)^2-(Xn)^2\}+(Yn)\times\{(Xn-1)^2-(Xn+1)^2\}+(Yn+1)\times\{(Xn)^2-(Xn-1)^2\}}{2[(Yn-1)\times\{(Xn+1)-(Xn)\}+(Yn)\times\{(Xn-1)-(Xn+1)\}+(Yn+1)\times\{(Xn)-(Xn-1)\}]} \quad \dots (1)$$

It should be noted that since a certain period of time is required for the readout of charge signals from the C-MOS 5, the calculation of AF evaluation values, the detection of a peak of the AF evaluation values, the calculation according to the above formula (1), and the like, as shown in Fig. 14, the timing at which the lens focusing position $P$ is calculated through the above-mentioned calculation is the exposure timing that is past the exposure timing corresponding to the maximum value $Yn$ of the AF evaluation value and at which a charge signal is obtained after the AF evaluation value has decreased four times consecutively.

The lens focusing position $P$ obtained as mentioned above is a lens focusing position when the C-MOS 5 is displaced by a predetermined distance, that is, with respect to an imaging surface displaced by the predetermined distance. Accordingly, a value of the lens focusing position $P$ that takes an image surface difference of a predetermined distance (for example, 500 $\mu$m) into account is determined as a lens focusing position $Q$ with respect to the imaging home position for performing the actual shooting operation.

In this way, the lens focusing position $Q$ can be obtained before the movement of the focus lens 2a by phase difference AF control is finished.

Then, when the processing of step S164 is finished, the process advances to step S16 of Fig. 11.

In step S16, the C-MOS 5 moves so as to return to the imaging home position (210 to 220 ms in Figs. 14 and 15).

In step S17, the movement of the focus lens 2a is stopped at the lens focusing position $Q$ (235 ms in Figs. 14 and 15).

In step S18, the shutter mechanism 4 is closed.

In step S19, the charge stored in the C-MOS 5 is discharged for reset.

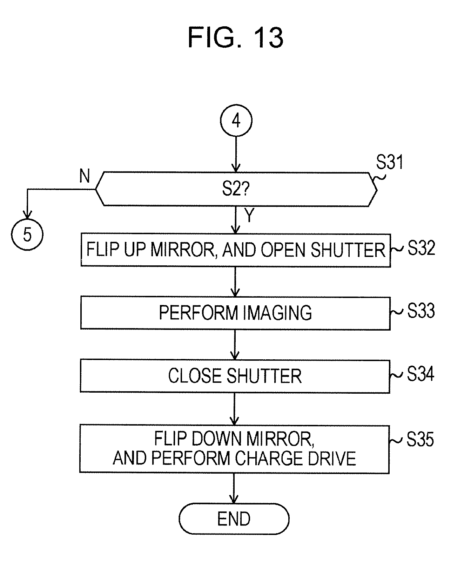

In step S20, it is determined whether or not the S1 state has been cancelled. At this time, for example, when the S1 state is canceled by the user operating the operating section OP, this operation flow is finished, and if the S1 state is not cancelled, the process advances to step S31 of Fig. 13.

In step S31, it is determined whether or not the S2 state has been entered. At this time, the process is placed on standby while repeating the determinations of steps S20 and S31 until the S2 state is entered. Then, when the S2 state is entered, it is regarded that the actual shooting operation has been commanded, and the process advances to step S32.

In step S32, the main mirror 10 and the sub mirror 20 become the mirror-up state, and the shutter mechanism 4 becomes open.

In step S33, imaging, that is, exposure as the actual shooting operation is performed in the C-MOS 5.

In step S34, the shutter mechanism 4 becomes closed.

In step S35, the main mirror 10 and the sub mirror 20 become the mirror-down state, a charge drive of reading out charge signals from the C-MOS 5 and storing image data into the memory card MC is performed, and this operation flow is finished.

As described above, in the imaging apparatus 1 according to the embodiment of the present invention, of the four (typically, a plurality of) filters 601 to 604 included in the AF circuit 600, the AF evaluation values obtained by using the HPF 601 are used most preferentially in detecting the lens focusing position of the focus lens 2a. In this way, since the HPF 601, which emphasizes and extracts high frequency band components that increase in image data when shooting a typical subject, is set to be used preferentially, it is possible to perform high-precision focusing control with respect to various kinds of subject.

Further, the lens focusing position of the focus lens 2a is detected by preferentially using AF evaluation values obtained by a predetermined filter (which in this example is the HPF 601) having a frequency characteristic of emphasizing and extracting components in a relatively high frequency band, from among the four (typically, a plurality of) filters 601 to 604. By adopting this configuration, it is possible to perform focusing control in conformity to the human visual characteristic of perceiving a subject image as being sharper when high frequency components increase, thus enabling high-precision focusing control.

Further, light from the subject is split into two optical paths, and focusing control based on the phase difference method and focusing control based on the contrast method are carried out in parallel by using the respective split light beams. This makes it possible to, for example, drive the focus lens 2a to the vicinity of the lens focusing position in a short time by focusing control based on the phase difference method, while ensuring the precision of focusing control by means of focusing control based on the contrast system. As a result, fast and precise focusing control can be performed.

Further, the optical positions of the focusing surfaces associated with focusing detection based on the phase difference method and focusing detection based on the contrast method are made to mutually differ, and focusing control based on the contrast method is started after focusing control based on the phase difference method is started. Due to this configuration, focusing controls based on two different methods are performed simultaneously, and the lens focusing position of the focus lens 2a can be detected by the focusing control based on the contrast method before a focused state is realized by the focusing control based on the phase difference method. As a result, it is possible to realize fast and high-precision focusing control. Since focusing control can be effected without moving the focus lens 2a in the reverse direction, for example, it is possible to prevent the problem of so-called backlash. Further, it is possible to perform focusing control so as to allow a subject viewed through a viewfinder or the like to smoothly change from a blurred state to a focused state, thereby achieving improved focusing feel.

<Modifications>

While the embodiment of the present invention has been described above, the present invention is not limited to the configurations described above.

While in the above-described embodiment the three band-pass filters having different frequency characteristics, the BPF (0.4 fn) 602, the BPF (0.3 fn) 603, and the BPF (0.1 fn) 604 are employed, this should not be construed restrictively. For example, band-pass filters or the like for mainly extracting (transmitting) components in a frequency band in the vicinity of 0.5 fn or 0.2 fn may be employed. That is, there may be employed one or more band-pass filters for mainly extracting (transmitting) components in a frequency band in the vicinity of n times (0<n<1) of fn.

It should be noted that in a case where the taking lens unit 2 is detachable with respect to the imaging apparatus body 300, a configuration may be adopted in which a plurality of band-pass filters having different frequency characteristics are prepared in advance, and upon mounting the taking lens unit 2 to the imaging apparatus body 300, the control section 101 obtains information (lens information) specifying lens characteristics from a ROM or the like within the taking lens unit 2, and selectively employs one or more band-pass filters as the band-pass filters for use in contrast AF control. For example, five band-pass filters for mainly extracting (transmitting) components in frequency bands in the vicinity of 0.1 fn, 0.2 fn, 0.3 fn, 0.4 fn, and 0.5 fn may be prepared in advance, and in according with lens information, three band-pass filters for mainly extracting (transmitting) components in frequency bands in the vicinity of 0.1 fn, 0.3 fn, and 0.4 fn may be selectively employed as the band-pass filters for use in contrast AF control.

While in the above-mentioned embodiment the four filters having different frequency characteristics, the HPF 601, the BPF (0.4 fn) 602, the BPF (0.3 fn) 603, and the BPF (0.1 fn) 604 shown in Fig. 8 are employed, this should not be construed restrictively.

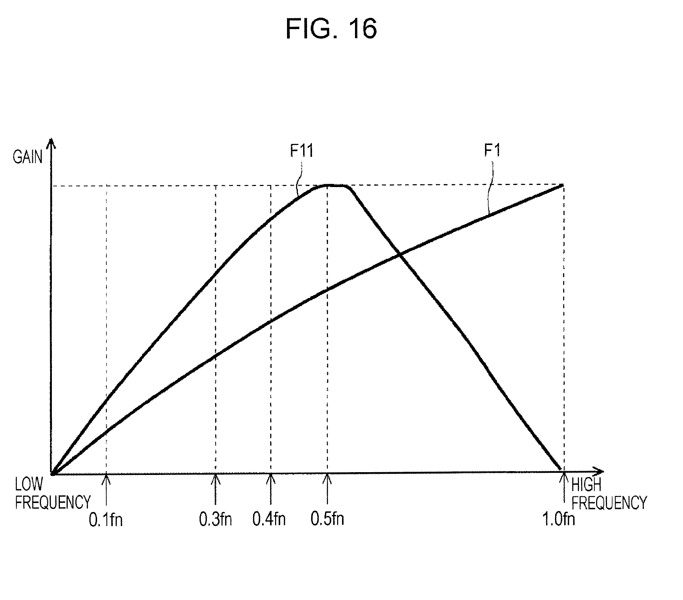

For example, two band-pass filters having different frequency characteristics shown in Fig. 16 may be employed. The curve F1 shown in Fig. 16 indicates the frequency characteristics of the HPF 601 shown in Fig. 8. The curve F2 indicates, as opposed to the HPF 601, the frequency characteristics of an HPF that emphasizes and extracts high frequency components in the vicinity of a predetermined frequency band (for example, 0.2 fn to 0.4 fn) in which frequency components of image data increase as subjects with definite contours increase during typical shooting. It should be noted that in the following description, a HPF having the frequency characteristics represented by the curve F1 will be referred to as HPF 1, and a HPF having the frequency characteristics represented by the curve F2 will be referred to as HPF 2.

In the HPF 2, the gain with respect to a high frequency band in the vicinity of 1.0 fn is set small as compared with the HPF 1, thereby making it possible to prevent extraction (transmission) of so-called noise components in image data. Further, as described above, the HPF 2 emphasizes and extracts high frequency components in the vicinity of a predetermined frequency band in which frequency components of image data increase as subjects with definite contours increase during typical shooting. Therefore, as compared with the HPF 1, the use of the AF evaluation values obtained by using the HPF 2 makes it possible to achieve more precise focusing with respect to a subject while reducing the influence of noise components.

Accordingly, when using the HPFs 1, 2, from the viewpoint of focusing precision, it is preferable to detect the lens focusing position of the focus lens 2a by preferentially using the predetermined AF evaluation values (that is, the AF evaluation value set) acquired by using, from among the two HPFs, the HPF 2 having a frequency characteristic of emphasizing and extracting components in a predetermined frequency band (0.2 fn to 0. 4 fn in this example) relative to the HPF 1.

Now, description will be given of shooting operation flows in a case where contrast AF control using the HPFs 1, 2 is adopted in the imaging apparatus. It should be noted that in these shooting operation flows, of the shooting operation flows shown in Figs. 10 to 13, the flow relating to the lens focusing position detecting operation in step S15 is different, and other operations are the same. That is, the lens focusing position detecting operation flow differs from that shown in Fig. 12.

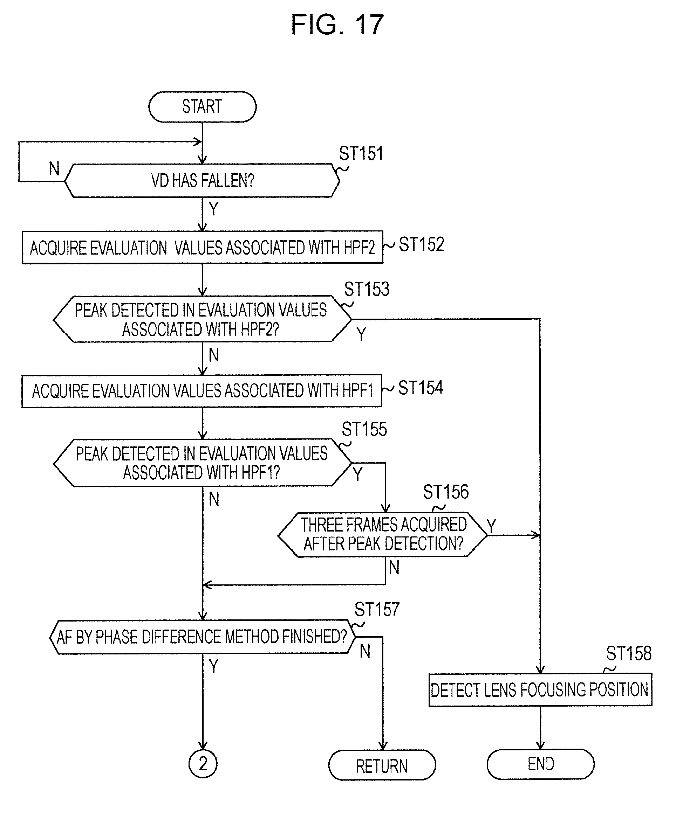

Fig. 17 shows a lens focusing position detecting operation in a case where the HPFs 1, 2 are used.

In step ST 151, it is determined whether or not a vertical synchronization signal (VD pulse) for each 200 fps timing corresponding to the image data acquisition rate (frame rate) in the C-MOS 5 has fallen. At this time, the determination of step S151 is repeated until the VD pulse falls, and when the VD pulse falls, the process then advances to step ST152.

In step ST152, the contrast AF control section 105 acquires AF evaluation values obtained by using the HPF 2, that is, the contrast AF control section 105 acquires AF evaluation values associated with the HPF 2. That is, the AF evaluation values associated with the HPF 2 are acquired in synchronization with the falling of the VD pulse.

In step ST153, it is determined whether or not a peak of AF evaluation value has been found with respect to the AF evaluation values (that is, the AF evaluation value set) associated with the HPF 2. At this time, the process advances to step ST158 if a peak of AF evaluation value is found, and the process advances to step ST154 if a peak of AF evaluation value has not been found.

In step ST154, the contrast AF control section 105 acquires AF evaluation values obtained by using the HPF 1, that is, the contrast AF control section 105 acquires AF evaluation values associated with the HPF 1.

In step ST155, it is determined whether or not a peak of AF evaluation value has been found with respect to the AF evaluation values (that is, the AF evaluation value set) associated with the HPF 1. At this time, the process advances to step ST156 if a peak of AF evaluation value is found, and the process advances to step ST157 if a peak of AF evaluation value has not been found.

In step ST156, it is determined whether or not three frames of image data have been acquired since the detection of a peak of the AF evaluation values associated with the HPF 1. That is, it is determined whether or not the VD pulse has fallen three times and three frames of image data have been acquired in the C-MOS 5 since the detection of a peak of the AF evaluation values associated with the HPF 1. At this time, if three frames of image data have not been acquired since the detection of a peak of the AF evaluation values associated with the HPF 1, the process advances to step ST157, and if three frames of image data have been acquired, the process advances to step ST158.

The reason for determining whether or not three frames of image data have been acquired is to ensure that the AF evaluation values acquired by using the HPF 2 be used preferentially over those acquired by using the HPF 1 in consideration of the frequency dependence of MTF shown in Fig. 20.

In step ST157, the same processing as that of step S163 of Fig. 12 is performed.

In step ST158, the lens focusing position is detected on the basis of the AF evaluation values (that is, the AF evaluation value set). At this time, if the process has advanced to step ST158 from step ST153, the lens focusing position is detected on the basis of the AF evaluation values associated with the HPF 2. If the process has advanced to step ST158 from step ST156, the lens focusing position is detected on the basis of the AF evaluation values (that is, the AF evaluation value set) associated with the HPF 1. Then, upon finishing the processing of step ST158, the process advances to step S16 of Fig. 11.

In the imaging apparatus that adopts the configuration as described above, the AF evaluation values acquired by using, from among the two (typically a plurality of) filters (HPFs 1, 2) included in the AF circuit 600, the HPF 2 that emphasizes and extracts those frequency components which increase when shooting a typical subject, are used most preferentially in detecting the lens focusing position of the focus lens 2a. This configuration makes it possible to perform high-precision focusing control with respect to various kinds of subject.

Stated from a different perspective, the lens focusing position of the focus lens 2a is detected by using the AF evaluation values acquired by using, from among the two (typically a plurality of) filters (HPFs 1, 2) included in the AF circuit 600, the HPF 2 that emphasizes and extracts components in a predetermined frequency band (0.2 fn to 0.4 fn in this example), preferentially relative to the HPF 1. By adopting this configuration, for example, it is possible to perform focusing control with an emphasis on predetermined high frequency band components that increase when a captured image of a typical subject is in focus, thereby enabling high-precision focusing control.

In the above description, a frequency band of 0.2 fn to 0.4 fn is given as an example of the predetermined frequency band in which frequency components of image data increase as subjects with definite contours increase during typical shooting. In this regard, this predetermined frequency band is set as appropriate in accordance with the combination of conditions such as the kind of a subject, the property of the taking lens unit 2, the shooting magnification, the pixel pitch of the imaging device, and the like.

While in the above-described embodiment the three band-pass filters having different frequency characteristics, the BPF (0.4 fn) 602, the BPF (0.3 fn) 603, and the BPF (0.1 fn) 602 shown in Fig. 8 are employed, this should not be construed restrictively.

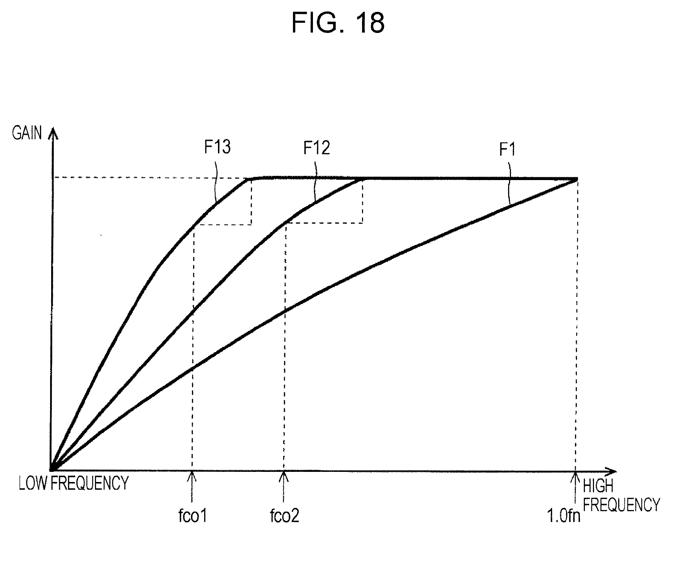

For example, as indicated by curves F12, F13 shown in Fig. 18, it is also possible to employ two HPFs having such frequency characteristics that their so-called cut-off frequencies are respectively fco1, fco2 instead of BPFs, and detect the lens focusing position by using AF evaluation values in order preferentially from the AF evaluation values obtained by using an HPF that emphasizes and extracts components in a higher frequency band. Assuming that three HPFs having frequency characteristics respectively indicated by the curves F1, F2, F13 are HPFa, HPFb, HPFc, the HPFa emphasizes and extracts components in the highest frequency band, the HPFb emphasizes and extracts components in the second highest frequency band, and the HPFc emphasizes and extracts components in the lowest frequency band.

While in the above-mentioned embodiment contrast AF control is performed on the basis of image data obtained by using the C-MOS 5 for obtaining recording image data at the time of actual shooting, this should not be construed restrictively. For example, a dedicated image sensor for acquiring image data for contrast AF control may be provided.

In a case where an image sensor having a plurality of pixels of three primary colors of RGB having a so-called Beyer arrangement is adopted for contract AF control, for example, when acquiring AF evaluation values, the AF evaluation values may be calculated by using only the pixel value of G, or the AF evaluation values may be calculated by using a luminance value Y calculated from the pixel values of RGB.

While in the above-mentioned embodiment the filters 601 to 604 are each configured as an electrical circuit, it is also possible to realize the functions of the filters 601 to 604 and the AF evaluation value computing function by executing a program in the control section 101. However, at present, a computing function configured by an electrical circuit generally provides higher computation speed and hence is more practical.

While the AF control unit 100 as shown in Fig. 2 is employed in the above-mentioned embodiment, this should not be construed restrictively. Another configuration may be adopted for the AF control unit. Hereinbelow, an AF control unit 100A will be described as an example of another configuration of the AF control unit.

Fig. 19 is a view schematically illustrating the configuration of the AF control unit 100A included in an imaging apparatus 1A according to a modification.

While the main mirror 10 is configured to include a half mirror in the imaging apparatus 1 according to the above-mentioned embodiment, as shown in Fig. 19, the imaging apparatus 1A according to the modification uses a main mirror 10A that employs a pellicle mirror as this half mirror.

Characteristically, a pellicle mirror has an extremely small thickness (on the order of 100 μm, for example) in comparison to a typical half mirror. Since it is extremely thin, such a pellicle mirror is not suitable for a mirror-up drive. Accordingly, the imaging apparatus 1A is configured such that at the time of actual shooting, the main mirror 10A does not undergo a mirror-up operation, and a sub mirror 20A is retracted downward from a position on the optical path of light from a subject.

It should be noted that the other configuration is the same as that of the imaging apparatus 1 according to the above-mentioned embodiment. As for the functions, operations, and the like, the only difference is that instead of both the main mirror 10 and the sub mirror 20 becoming the retracted state/blocking state with respect to the optical path, only the sub mirror 20A becomes the retracted state/blocking state with respect to the optical path, and since the other functions, operations, and the like are substantially the same, description thereof is omitted.

Now, description will be given of the advantage of adopting a pellicle mirror for the half mirror of the main mirror 10A.

In the imaging apparatus 1 according to the above-mentioned embodiment, assuming that the refractive index of a typical half mirror is about 1.5, and the thicknesses of the main mirror 10 and sub mirror 20 are respectively a, b, in the mirror-up state, the focus position is shifted to the user side (the right side in Fig. 2) by about 0. 5 (a+b) relative to that in the mirror-down state.

In a case where both phase difference AF control and contrast AF control are used in combination, it is necessary to make the optical positions of the first and second focusing surfaces different so that when moving the position of the focus lens 2a to realize the focused state of a subject, the focused state of the subject is realized on the second focusing surface earlier than on the first focusing surface. Accordingly, at this time, the C-MOS 5 must be moved by an additional amount along the optical axis L from the imaging home position by taking into account the shift (about 0.5b (a+b)) in focusing position due to the half mirror.

With regard to this problem, the shift in focusing position due to the half mirror can be reduced to as small as about 0.5 b by using an extremely thin pellicle mirror. That is, the amount of shift in focusing position occurring due to the main mirror 10 can be reduced. As a result, the amount of movement of the C-MOS 5 required for correcting this shift amount can be made small, thereby making it possible to simplify the configuration for moving the C-MOS 5.

While in the above-mentioned embodiment description is directed to the imaging apparatus of a type which performs phase difference AF control, this should not be construed restrictively. For example, the imaging apparatus used may be one which performs only contrast AF control.

**Claims**

1. A focusing control device for performing focusing control of an imaging apparatus, comprising:

   image acquiring means for time-sequentially acquiring a plurality of pieces of image data on the basis of light from a subject incident though an optical lens while driving the optical lens along an optical axis;
   evaluation value acquiring means for processing the plurality of pieces of image data respectively by using a plurality of filters having mutually different frequency characteristics to acquire an evaluation value set for each filter constituting the plurality of filters; and
   focusing detection means for detecting a focusing position of the optical lens by using an evaluation value set, which is acquired by processing using a predetermined filter of the plurality of filters in the evaluation value acquiring means, more preferentially over evaluation value sets acquired by processing using other filters of the plurality of filters different from the predetermined filter.

2. The focusing control device according to Claim 1, wherein the predetermined filter has a frequency characteristic of emphasizing and extracting a high frequency band component relative to other filters of the plurality of filters different from the predetermined filter.

3. The focusing control device according to Claim 1, wherein the focusing detection means detects the focusing position by preferentially using an evaluation value set acquired by a filter of the plurality of filters which has a frequency characteristic of emphasizing and extracting a relatively high frequency band component.

4. The focusing control device according to Claim 1, wherein the predetermined filter has a frequency characteristic of emphasizing and extracting a predetermined frequency band component relative to other filters of the plurality of filters different from the predetermined filter.

5. The focusing control device according to any one of Claims 1 to 4, further comprising:

   phase difference detection means for detecting a focusing position of the optical lens by using a phase difference method; and
   light splitting means for splitting light from the subject into first and second optical paths through which the light is respectively guided to the focusing detection means and the phase difference detection means,

wherein focusing control using the phase difference detection means, and focusing control using the focusing detection means are executed in parallel.

6. The focusing control device according to Claim 5, wherein:

the focusing detection means has a focusing surface at a different optical position relative to a focusing surface associated with the phase difference detection means; and
the focusing control device further comprises timing control means for starting focusing control using the focusing detection means after starting focusing control using the phase difference detection means.

7. An imaging apparatus comprising the focusing control device according to any one of Claims 1 to 6.

# FIG. 1

# FIG. 2

## FIG. 3

## FIG. 4

## FIG. 5

FIG. 6

# FIG. 7

600: AF CIRCUIT

| 601 | 611 |
|---|---|
| HPF | EVALUATION VALUE COMPUTING SECTION |

| 602 | 612 |
|---|---|
| BPF (0.4fn) | EVALUATION VALUE COMPUTING SECTION |

| 603 | 613 |
|---|---|
| BPF (0.3fn) | EVALUATION VALUE COMPUTING SECTION |

| 604 | 614 |
|---|---|
| BPF (0.1fn) | EVALUATION VALUE COMPUTING SECTION |

# FIG. 8

GAIN

F4    F3    F2    F1

LOW
FREQUENCY  0.1fn    0.3fn    0.4fn    1.0fn  HIGH
FREQUENCY

## FIG. 9

OUTPUT

Cv2

Cv1

LOW FREQUENCY

HIGH FREQUENCY

0.2fn    0.4fn    1.0fn

## FIG. 10

START

START C-MOS  ~S1

OPEN SHUTTER  ~S2

PERFORM DISTANCE MEASUREMENT BY PHASE DIFFERENCE AF  ~S3

LESS THAN 30μm ← AMOUNT OF DEVIATION FROM LENS FOCUSING POSITION? → 1,000μm OR MORE   S4

(2)

30 μm OR MORE AND LESS THAN 1,000 μm

PERFORM RETRACTION DRIVE OF FOCUS LENS  ~S5

(1)

(1)

# FIG. 11

① 

START MOVEMENT OF C-MOS TO FAR OR NEAR SIDE ~ S11

MOVEMENT FINISHED? — N / Y ~ S12

START MOVEMENT OF FOCUS LENS ~ S13

START ACQUISITION OF AF EVALUATION VALUES AT 200 fps ~ S14

DETECT LENS FOCUSING POSITION ~ S15

MOVE C-MOS TO IMAGING HOME POSITION ~ S16

②

STOP FOCUS LENS AT FOCUSING POSITION ~ S17

CLOSE SHUTTER ~ S18

⑤

RESET C-MOS ~ S19

S1 OFF? — N / Y ~ S20

④

END

EP 1 975 662 A1

## FIG. 12

**START**

S151 — VD HAS FALLEN? → N (loop back) / Y

S152 — ACQUIRE EVALUATION VALUES ASSOCIATED WITH HPF

S153 — PEAK DETECTED IN EVALUATION VALUES ASSOCIATED WITH HPF? → Y / N

S154 — ACQUIRE EVALUATION VALUES ASSOCIATED WITH BPF (0.4 fn)

S155 — PEAK DETECTED IN EVALUATION VALUES ASSOCIATED WITH BPF (0.4 fn)? → Y / N

S156 — THREE FRAMES ACQUIRED AFTER PEAK DETECTION? → Y / N → 3

S157 — ACQUIRE EVALUATION VALUES ASSOCIATED WITH BPF (0.3 fn)

S158 — PEAK DETECTED IN EVALUATION VALUES ASSOCIATED WITH BPF (0.3 fn)? → Y / N

S159 — THREE FRAMES ACQUIRED AFTER PEAK DETECTION? → Y / N → 3

S160 — ACQUIRE EVALUATION VALUES ASSOCIATED WITH BPF (0.1 fn)

S161 — PEAK DETECTED IN EVALUATION VALUES ASSOCIATED WITH BPF (0.1 fn)? → Y / N

S162 — THREE FRAMES ACQUIRED AFTER PEAK DETECTION? → Y / N

3

S163 — AF BY PHASE DIFFERENCE METHOD FINISHED? → Y / N

S165 — MOVE C-MOS TO IMAGING HOME POSITION

S164 — DETECT LENS FOCUSING POSITION

2

RETURN

END

23

# FIG. 13

④

S31
N  S2?

⑤  Y

FLIP UP MIRROR, AND OPEN SHUTTER ~ S32

PERFORM IMAGING ~ S33

CLOSE SHUTTER ~ S34

FLIP DOWN MIRROR,
AND PERFORM CHARGE DRIVE ~ S35

END

# FIG. 14

TIME (ms)

| | 0 10 20 30 40 50 60 70 80 90 100 110 120 130 140 150 160 170 180 190 200 210 220 230 240 |

MOTOR RPM — MOTOR START-UP: 6rps, 3rps, 1.5, 1.2

PI NUMBER — 74p/10ms, 20p/10ms, 10p/10ms, 8p/10ms

IMAGE SURFACE MOVING SPEED (µm/10 ms) — 410µm/10ms, 110µm/10ms, 65µm/10ms, 45µm/10ms

AF MICROCOMPUTER START — START

PHASE DIFFERENCE AF DISTANCE MEASUREMENT — DISTANCE MEASUREMENT, MOVEMENT, DISTANCE MEASUREMENT, MOVEMENT

C-MOS DRIVE — START

AF EVALUATION VALUE vs LENS POSITION

Yn, Yn-1, Yn+1

FIG. 15

FIG. 16

# FIG. 17

```
                    START

            ┌──────────────────────────────────┐  ST151
         N ◁│        VD HAS FALLEN?            │◁
            └──────────────────────────────────┘
                         │ Y
            ┌──────────────────────────────────┐  ST152
            │ ACQUIRE EVALUATION VALUES        │
            │ ASSOCIATED WITH HPF2             │
            └──────────────────────────────────┘
                         │
            ┌──────────────────────────────────┐  ST153
            │ PEAK DETECTED IN EVALUATION      │
            │ VALUES ASSOCIATED WITH HPF2?     │─── Y ──────────┐
            └──────────────────────────────────┘                │
                         │ N                                     │
            ┌──────────────────────────────────┐  ST154         │
            │ ACQUIRE EVALUATION VALUES        │                │
            │ ASSOCIATED WITH HPF1             │                │
            └──────────────────────────────────┘                │
                         │                                       │
            ┌──────────────────────────────────┐  ST155         │
            │ PEAK DETECTED IN EVALUATION      │                │
            │ VALUES ASSOCIATED WITH HPF1?     │── Y ──┐        │
            └──────────────────────────────────┘       │        │
                         │ N                            │        │
                         │          ┌──────────────────────┐ ST156
                         │          │ THREE FRAMES ACQUIRED │       │
                         │          │ AFTER PEAK DETECTION? │─ Y ───┤
                         │          └──────────────────────┘        │
                         │◁───────────────│ N                       │
                         │                                          │
            ┌──────────────────────────────────┐  ST157            │
            │ AF BY PHASE DIFFERENCE METHOD     │                   │
            │ FINISHED?                         │── N ──┐           │
            └──────────────────────────────────┘       │           │
                         │ Y                            │    ┌──────────────────────────┐ ST158
                         │                              │    │ DETECT LENS FOCUSING     │
                         │                              │    │ POSITION                 │
                         │                              │    └──────────────────────────┘
                         │                              │           │
                        ( 2 )                       RETURN        END
```

# FIG. 18

FIG. 19

FIG. 20

MTF

0.1fn

0.3fn

0.4fn

IMAGING SURFACE POSITION

**INTERNATIONAL SEARCH REPORT**

| International application No. |
| --- |
| PCT/JP2007/050518 |

A. CLASSIFICATION OF SUBJECT MATTER
*G02B7/28*(2006.01)i, *G02B7/34*(2006.01)i, *G02B7/36*(2006.01)i, *G03B13/36*
(2006.01)i, *H04N5/232*(2006.01)i, *H04N101/00*(2006.01)n

According to International Patent Classification (IPC) or to both national classification and IPC

B. FIELDS SEARCHED

Minimum documentation searched (classification system followed by classification symbols)
G02B7/28, G02B7/34, G02B7/36, G03B13/36, H04N5/232, H04N101/00

Documentation searched other than minimum documentation to the extent that such documents are included in the fields searched
Jitsuyo Shinan Koho          1922-1996     Jitsuyo Shinan Toroku Koho    1996-2007
Kokai Jitsuyo Shinan Koho     1971-2007     Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 59-133783 A   (Matsushita Electric<br>Industrial Co., Ltd.),<br>01 August, 1984 (01.08.84),<br>Claim 1<br>& US 004484806 A         & EP 000092850 A<br>& DE 003361983 D         & AU 001401183 A<br>& CA 001212459 A | 1-3,7<br>4-6 |
| X<br>Y | JP 63-215171 A   (Victor Company Of Japan,<br>Ltd.),<br>07 September, 1988 (07.09.88),<br>Claims 1, 2<br>(Family: none) | 1-3,7<br>4-6 |

| ☒   Further documents are listed in the continuation of Box C. | ☐   See patent family annex. |
| --- | --- |

\*      Special categories of cited documents:
"A"     document defining the general state of the art which is not considered   to be of particular relevance
"E"     earlier application or patent but published on or after the international filing date
"L"     document which may throw doubts on priority claim(s) or which is cited to establish the publication date of another citation or other special reason (as specified)
"O"     document referring to an oral disclosure, use, exhibition or other means
"P"     document published prior to the international filing date but later than the priority date claimed

"T"     later document published after the international filing date or priority date and not in conflict with the application but cited to understand the principle or theory underlying the invention
"X"     document of particular relevance; the claimed invention cannot be considered novel or cannot be considered to involve an inventive step when the document is taken alone
"Y"     document of particular relevance; the claimed invention cannot be considered to involve an inventive step when the document is combined with one or more other such documents, such combination being obvious to a person skilled in the art
"&"     document member of the same patent family

| Date of the actual completion of the international search<br>    03 April, 2007 (03.04.07) | Date of mailing of the international search report<br>    17 April, 2007 (17.04.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/050518 |

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-284155 A  (Fuji Photo Film Co.,<br>Ltd.),<br>13 October, 2005 (13.10.05),<br>Claim 3<br>& US 2005/0219403 A1 | 1,7<br>4-6<br>2,3 |
| X<br>Y<br>A | JP 05-308555 A  (Fuji Photo Optical Co.,<br>Ltd.),<br>19 November, 1993 (19.11.93),<br>Par. No. [0015]<br>& US 005432332 A | 1,7<br>4-6<br>2,3 |
| Y | JP 2005-351925 A  (Fuji Photo Film Co.,<br>Ltd.),<br>22 December, 2005 (22.12.05),<br>Par. Nos. [0066], [0067]<br>(Family: none) | 5,6 |
| Y | JP 2004-309866 A  (Pentax Corp.),<br>04 November, 2004 (04.11.04),<br>Claims 1, 2<br>& US 2004/0202461 A1    & DE 102004017536 A<br>& FR 002853733 A | 5,6 |
| Y | JP 2004-219581 A  (Canon Inc.),<br>05 August, 2004 (05.08.04),<br>Par. Nos. [0044], [0058]<br>(Family: none) | 5,6 |
| A | JP 2005-189876 A  (Nikon Corp.),<br>14 July, 2005 (14.07.05),<br>Full text; all drawings<br>(Family: none) | 5,6 |

Form PCT/ISA/210 (continuation of second sheet) (April 2005)

**REFERENCES CITED IN THE DESCRIPTION**

**Patent documents cited in the description**

- JP 5308556 A